# EUROPEAN PATENT APPLICATION

(11) **EP 4 047 483 A1**
(43) Date of publication of application: **24.08.2022**
(21) Application number: 21158686.2
(22) Date of filing: 23.02.2021
(51) Int. Cl.: G06F 11/36, G06F 11/30

(54) **COMPUTER CARD FOR TESTING IN-VEHICLE SOFTWARE**

(71) Applicant: Aptiv Technologies Limited, St. Michael (BB)
(72) Inventor: Szelest, Marcin, 31-232 Kraków (PL); Skruch, Pawe, 32-031 Mogilany (PL)
(74) Representative: Vigand, Philippe

(57) **Abstract**

A computer card (100) for testing a software of an in-vehicle computer, the computer card (100) comprising:
• A computing unit (110) comprising at least a system on a chip 'SoC' for the in-vehicle computer, the computing unit (110) being adapted to run the software to be tested,
• A field-programmable gate array 'FPGA' (120) connected to the computing unit for feeding the software to be tested with environment and/or driving data (EDD) and for recovering detection and/or behavior data (DBD) from the software to be tested.

## Description

### TECHNICAL FIELD

The present disclosure relates to the field of testing devices and methods for software embedded in a vehicle and running on a vehicle on-board computer. Such testing devices and methods can be used to test software or software updates before release to customer vehicles.

### BACKGROUND

Modern vehicles usually comprise an on-board or in-vehicle computer adapted to perform different tasks relating to safety, driving assistance and/or autonomous or semi-autonomous driving.

Such computers can be complex because the vehicle can comprise many different sensors, such as a GPS, radars, cameras, lidars and/or ultrasonic sensors. The corresponding software can comprise a variety of perception modules dedicated to specialized tasks, such as traffic sign recognition, lane detection, path planning, etc.

Because such software is critical for the vehicle safety, it is required to test it intensively before release to a car manufacturer and/or directly to the customer vehicles. In addition, regular software updates are now expected, which increases the need for thorough software testing before any update release.

To reduce the need to repeat test drives for each software release, a conventional approach is to test or validate incoming software releases outside of the vehicle with input data consisting in vehicle environment and/or driving data. Such a test method is commonly called resimulation or shortly 'ReSim'.

The environment and/or driving data may be actual vehicle environment and/or driving data that has been recorded and is reused virtually. Environment and/or driving data stored for this purpose is named 'RWUP' (Real World User Profile). RWUP is used only for Open Loop ReSim (also called 'Replay ReSim'), which allows to compare detection data between the real vehicle used to record the RWUP and the tested software or between ground truth data (for example obtained from humans) and the tested software.

In order to analyze both the detection data and the behavior data obtained from a tested software, it is required to use Closed Loop ReSim: the environment and/or driving data is a virtually created environment, which can be modified in response to the vehicle behavior.

Different abstraction levels can be used to perform ReSim, the most common being Software in the Loop 'SiL' and Hardware in the Loop 'HiL'.

SiL integrates all the software libraries of a vehicle and takes control on feeding them with relevant data (RWUP or Virtual Environment). SiL binary is usually encapsulated into a container (such as Docker or Singularity). Many containers may be run in parallel on a computing cluster in order to test different software and/or different environment and/or driving data and to speed-up resimulation time due to scaling. SiL allows to resimulate thousands of kilometers of environment and/or driving data in a reasonable time. Unfortunately, the software to be tested must be exported to SiL's libraries which has the following drawbacks:
- The behavior of the tested software under SiL ReSim is slightly different from the behavior of the software embedded in a vehicle, in particular because not all vehicle hardware features are used or properly modelled in the SiL's libraries.
- A specific SiL environment must be developed for each particular vehicle, which may be time consuming to create the SiL libraries and to perform the testing and integration steps.
- The systems on a chip 'SoC' used in current in-vehicle computers (for example the MobileEye EyeQ5) are bigger and more complex than processors of High-Performance Computing Clusters. As a result, SiL ReSim for software running on recent in-vehicle SoC may be slow and may request very powerful High-Performance Computing Cluster consuming significant amount of power.

HiL uses the final hardware i.e. an off-board version of the in-vehicle computer, to run the software to be tested. This option is the most accurate and closest to the behavior of the vehicle intended to receive the software. HiL works by default in real time i.e. similarly to an actual vehicle driving in. Consequently, environment and/or driving data must be fed continuously without any delays nor interrupts, which renders difficult scalability because of bandwidth and/or storage limitation. In addition, HiL is also the most expensive variant of ReSim since a plurality of vehicle computers must be acquired for each type of vehicle and each HiL must be fed in real time with data through high bandwidth connections.

Finally, both SiL and HiL are created for a specific project (i.e. vehicle) and the reuse of the corresponding hardware and/or software for other projects is strongly limited.

There is thus a need to improve the situation. More precisely, there is a need to propose a device and a method allowing to perform vehicle software testing with a high level of accuracy and flexibility for a low level of cost and resources.

### SUMMARY

The present disclosure concerns a computer card for testing a software of an in-vehicle computer, the computer card comprising:
- A computing unit comprising at least a system on a chip 'SoC' for the in-vehicle computer, the computing unit being adapted to run the software to be tested,
- A field-programmable gate array 'FPGA' connected to the computing unit for feeding environment and/or driving data to the software to be tested and for recovering detection and/or behavior data from the software to be tested.

Such a computer card allows an efficient testing of the in-vehicle software, in particular due to the computing unit being adapted for the in-vehicle computer and preferably identical or very close to the in-vehicle computer. Indeed, the software to be tested may run natively on the computing unit. The computer card is preferably adapted to be used off board, i.e. outside a vehicle and physically connected to a server.

Advantageously, the computing unit further has at least one coprocessor for supplementing the SoC in the in-vehicle computer, the at least one coprocessor being connected to the SoC and/or to the FPGA. The coprocessor may be adapted to the in-vehicle computer or identical to the coprocessor of the in-vehicle computer. The software testing may be improved by integrating such a coprocessor on the present computer card.

Advantageously, the computer card further has a buffer memory integrated into the FPGA or connected to the FPGA. The buffer memory may allow a smoother data flow to and from the computing unit, allowing higher testing performance and reliability.

Advantageously, the computer card further has a physical connector to connect the card to a computer system. Such a connector may render easier the connection to a computer system, for example comprising a server to exchange data with the computer card.

The present disclosure also relates to a computer system for testing a software of an in-vehicle computer, the computer system comprising:
- A plurality of computer cards as disclosed above,
- At least one server to provide environment and/or driving data to the plurality of computer cards and to receive detection and/or behavior data from the plurality of computer cards.

Such a computer system allows off board testing of the software intended to run on the in-vehicle computer in production mode (i.e. when released) with high efficiency and moderate costs. Preferably, the computer cards only include SoCs of in-vehicle computers, i.e. adapted for or identical to SoCs of in-vehicle computers intended to run the software.

Advantageously, the at least one server provides different environment and/or driving data to different groups of computer cards. This allows to test different driving scenarios in parallel. For example, the server may provide each computer card with different environment and/or driving data.

The present invention also concerns a method for testing a software of an in-vehicle computer on at least one computer card comprising a computing unit having at least a system on a chip 'SoC' for the in-vehicle computer, the method comprising the steps of:
a) at the computing unit, running the software to be tested,
b) at the computer card, receiving environment and/or driving data,
c) at the computer card, inputting the environment and/or driving data in the computing unit,
d) at the computing unit, processing the environment and/or driving data by the software to obtain detection and/or behavior data,
e) at the computing unit, outputting the detection and/or behavior data.

Advantageously, the receiving step b), the inputting step c) and the outputting step d) are performed through a field-programmable gate array 'FPGA' embedded on the at least one computer card.

Advantageously, a plurality of computer cards is provided. The computer cards may be identical or different, for example if different software of different in-vehicle computers are to be tested.

Advantageously, the software to be tested runs on different groups of computer cards and the receiving step b) includes receiving different environment and/or driving data by the different groups of computer cards. Consequently, a single software can be tested with different driving scenarios and conditions in parallel.

The present disclosure further concerns a method for testing a software of an in-vehicle computer, the software running on at least one computer card connected to a server, the at least one computer card comprising a computing unit having at least a system on a chip 'SoC' for the in-vehicle computer, the method comprising the steps of:
i. at the server, storing environment and/or driving data
ii. at the server, providing the environment and/or driving data to the computer card
iii. at the server, receiving the detection and/or behavior data generated by the tested software
iv. at the server, evaluating the detection and/or behavior data.

Advantageously, the software to be tested run on different groups of computer cards, wherein different environment and/or driving data are stored in step i. and provided to the different groups of computer cards in step ii.

The present disclosure finally relates to a non-transitory computer readable medium comprising program instructions for performing one of the above methods. Such a readable medium may be part or connected to a server as disclosed above, for example physically, distantly or via the 'cloud' and can be executed by the server kernel.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a computer system according to an example of the present disclosure.
Figure 2 shows a visual summary of a method according to an example of the present disclosure.

### DETAILED DESCRIPTION

In the present disclosure, the terms "environment data" mean data of a vehicle environment, for example data acquired by different sensors and cameras, optionally processed in order to be fed to a computing unit of an in-vehicle computer. For example, the data may be processed by different modules or coprocessors. These environment data may be distance data, scanning data, video data, sound data, temperature data, positioning data or map data.

The terms "driving data" mean data linked with the driving of a vehicle, for example acquired from the vehicle steering unit (i.e. at least the driving wheel and pedals) and/or from sensors such as a positioning system, a speed sensor, a wheel orientation sensor, etc. and optionally processed to be fed to the computing unit of the in-vehicle computer. These driving data may comprise speed values, acceleration rates, deceleration rates, directions, turn signals, head light levels or engine speeds.

The environment data and/or the driving data may be based on RWUP and/or on a virtually created environment, according to the scenario to be tested.

The term "detection data" means data resulting from a detection made by a software adapted to an in-vehicle computer from the environment data. For example, the detection data may be the detection of another vehicle or a person with a relative position with regard to the vehicle running the software and/or a relative speed of the other vehicle or person.

The term "behavior data" means vehicle behavior directed by the software of the in-vehicle computer, i.e. driving instruction(s) provided by the in-vehicle computer and intended for a vehicle steering unit. The behavior data may comprise speed values, acceleration rates, deceleration rates, directions, turn signals, head light levels or engine speeds. Consequently, the behavior data may be substantially similar to the driving data except the driving data are acquired from the driver and possibly input to the software of an in-vehicle computer while the behavior data are produced by the software of the in-vehicle computer. For example, the behavior data may consist in normal driving along a driving lane or a street and/or in a maneuver to avoid an obstacle.

In the present disclosure, an in-vehicle software, i.e. a software to be run on a specific in-vehicle computer or electronic control unit 'ECU' may be tested and/or validated on a computer card, for example outside the vehicle or off board. The software may be in charge of safety functions, driving assistance, semi-autonomous driving or autonomous driving when running in the vehicle.

The computer card includes a computing unit adapted for the specific in-vehicle computer, such as identical or very close to the computing unit of the in-vehicle computer.

Consequently, the tested software is run on the same SoC, or a very close SoC in the testing environment and in the production environment (i.e. in the vehicle). For example, the SoC may be provided by Mobileye Vision Technology Ltd. or Nvidia Corporation.

When the SoC is not identical to the in-vehicle SoC, it could be a prototype or a pre-version of the in-vehicle SoC or a previous version of the in-vehicle SoC, for example before a limited hardware update.

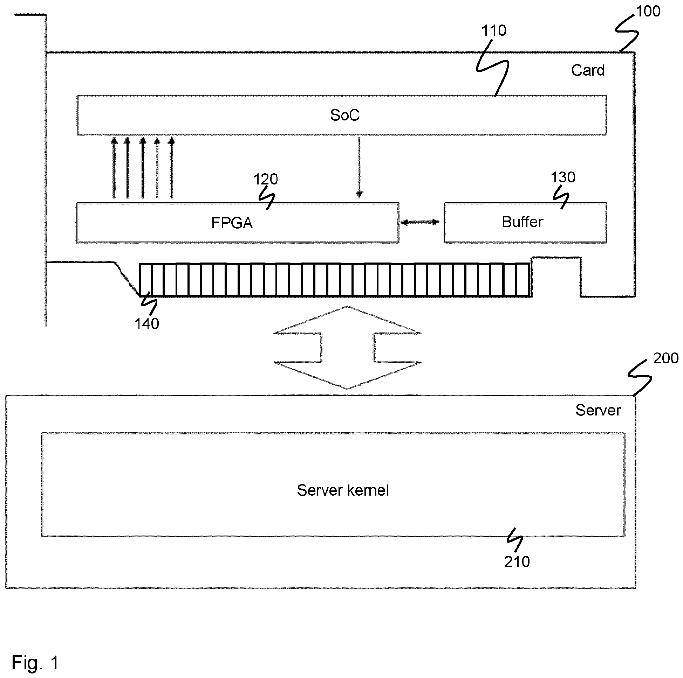

Figure 1 shows a computer system for testing the software of the vehicle on-board computer. The computer system includes at least one computer card 100 and at least one server 200. Preferably, the computer system includes a plurality of computer cards 100 (not shown).

The computer card 100 has a printed-circuit board and a computing unit 110 comprising a System on a Chip or 'SoC' adapted for an in-vehicle computer.

Optionally, the computing unit 110 may have one or several coprocessors (not shown). These co-processors are also adapted for the in-vehicle computer and may be identical or very similar to coprocessors used in-vehicle to supplement the SoC by performing certain specific tasks, such as driver monitoring.

The computer card 100 further includes a field-programmable gate array 'FPGA' 120 connected to the computing unit 110. The FPGA 120 may be programed according to the specific computing unit 110 to input environment and/or driving data in the computing unit 110 and/or to output detection and/or behavior data from the computing unit 110.

An optional buffer memory 130 may be integrated on the computer card 100 and/or in the FPGA 120 in order to allow temporary data storage.

Finally, a physical connector 140 may be used to plug the computer card into a slot, as known by the skilled person. The physical connector 140 may be driven by the FPGA or by a dedicated chip. For example, the physical connector 140 may support a high-speed computer bus such as PCI Express 'PCI-e', for example PCI-e v 5.0 or v6.0 16x or any other high-speed bus.

The server 200 may be a server of a classic type and may have a server kernel 210 and one or several storage units (not shown in Fig. 1). The server may supply the computer card 100 with environment and/or driving data and may receive detection and/or behavior data from the computer card 100. The server may also analyze the detection and/or behavior data in order to detect any inconsistency, false detection and/or inappropriate behavior data. The server may also monitor and/or analyze the different data flows with the computer cards.

For example, the server could have a first unit to supply environment and/or driving data, a second unit to receive and store the detection and/or behavior data and a third unit to analyze the received detection and/or behavior data. The server kernel 210 may be based on any kernel or operation system adapted for a server, for example a specialized Linux system/kernel.

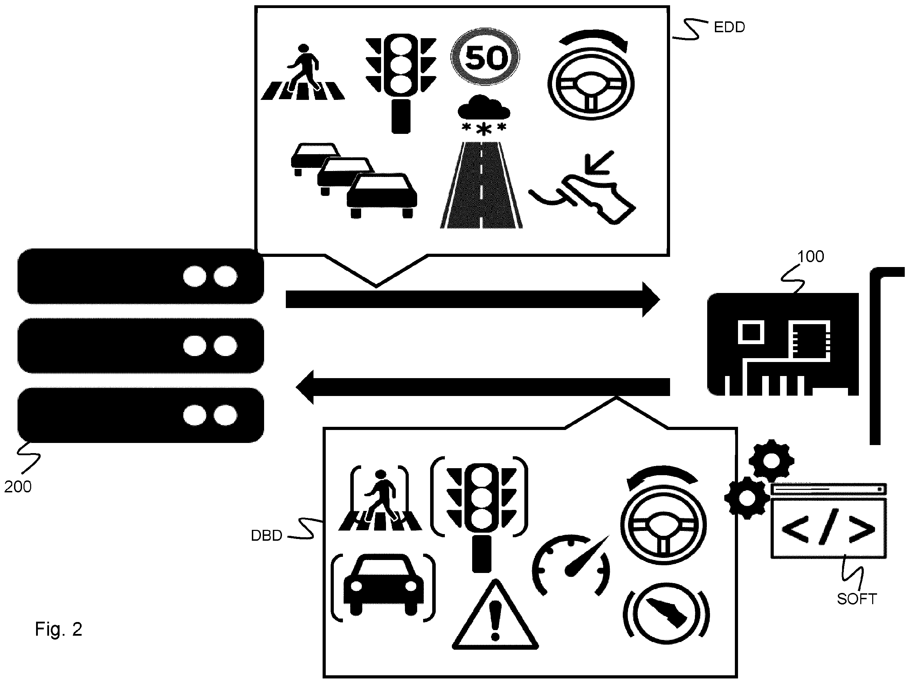

During testing and with reference to Fig. 2, at least one and preferably a plurality of computer cards 100 are plugged into the server 200 and at least one software (SOFT) to be tested is run onto the respective computing unit (step a), preferably natively i.e. without any container or virtualization.

For example, different computer cards or groups of computer cards may have different computing units such as different types of SoC or with or without coprocessors. In addition, different software or different software versions may be run on different groups of computer cards 100, depending on the purpose of the test. The server 200 stores environment and/or driving data (step i).

Fig. 2 illustrates that environment and/or driving data (EDD) may be sent by the server 200 (step ii) and received by the computer card (step b). The environment and/or driving data are received by the FPGA 120 and input to the computing unit 110, i.e. at least to the SoC and also to the coprocessors, if applicable (step c).

The software to be tested, running on the computing unit 110 then processes the environment and/or driving data and provides detection and/or behavior data (DBD - step d). In other words, the software performs the tasks it would perform in-vehicle, based on algorithms and/or machine learning, as known by the skilled person.

The detection and/or behavior data are outputted by the computing unit 110 to the FPGA 120 (step e) and then from the FPGA 120 (step f) to the server 200 through the physical connector 140 and received by the server 200 (step iii).

Then, the detection and/or behavior data may be evaluated, for example by the server 200 or by another computer (step iv) and the tested software can either be modified accordingly, further tested or validated for a release.

For example, the evaluation step iv. may consist in the comparison of the detection and/or behavior data with other detection and/or behavior data performed by another software, by an actual vehicle or by a human driver. Alternatively or in combination, the detection and/or behavior data are compared with ideal or theoretical detection and/or behavior data that are expected or must be obtained according to the specific environment and/or driving data inputted to the software.

Depending on the result of the evaluation step iv., the tested software may be corrected or released, i.e. distributed to car manufacturers of customers' vehicles.

The present method and device allow to perform testing and validation of an in-vehicle software with a high level of efficiency and for an acceptable cost, due to the use of a computing unit identical or at least very close from the computing unit of the in-vehicle computer intended to run the in-vehicle software.

In addition, the SoC and/or the coprocessor(s) may be positioned on a socket, allowing to reuse the computer card 100 for different types or versions of the computing unit. In this case, the FPGA 120 may be reprogramed to be adapted to exchange data with each specific computing unit.

The environment and/or driving data can be fed either in real time or in accelerated time, for example in which 1 second of environment and/or driving data represents 2, 5 or 10 seconds in real time. This allows to shorten the software testing time, in particular with regard to HiL which only supports real-time software testing.

## Claims

1. A computer card (100) for testing a software of an in-vehicle computer, the computer card (100) comprising:
• A computing unit (110) comprising at least a system on a chip 'SoC' for the in-vehicle computer, the computing unit (110) being adapted to run the software to be tested,
• A field-programmable gate array 'FPGA' (120) connected to the computing unit for feeding environment and/or driving data (EDD) to the software to be tested and for recovering detection and/or behavior data (DBD) from the software to be tested.

2. The computer card (100) of claim 1, wherein the computing unit (110) further includes at least one coprocessor for supplementing the SoC in the in-vehicle computer, the at least one coprocessor being connected to the SoC and/or to the FPGA.

3. The computer card (100) of claim 1 or claim 2, further comprising a buffer memory (130) integrated into the FPGA (120) or connected to the FPGA (120).

4. The computer card (100) of any one of claims 1 to 3, further comprising a physical connector (140) to connect the computer card (100) to a computer system.

5. A computer system for testing a software of an in-vehicle computer, the computer system comprising:
- A plurality of computer cards (100) according to claim 4,
- At least one server (200) to provide environment and/or driving data (EDD) to the plurality of computer cards (100) and to receive detection and/or behavior data (DBD) from the plurality of computer cards (100).

6. The computer system according to claim 5, in which the at least one server provides different environment and/or driving data (EDD) to different groups of computer cards (110).

7. A method for testing a software of an in-vehicle computer on at least one computer card (100) comprising a computing unit (110) having at least a system on a chip 'SoC' for the in-vehicle computer, the method comprising the steps of:
a) at the computing unit (110), running the software to be tested,
b) at the computer card (100), receiving environment and/or driving data (EDD),
c) at the computer card (100), inputting the environment and/or driving data (EDD) in the computing unit (110),
d) at the computing unit (110), processing the environment and/or driving data (EDD) by the software to obtain detection and/or behavior data (DBD),
e) at the computing unit (110), outputting the detection and/or behavior data (DBD).

8. The method of claim 7, wherein the receiving step b), the inputting step c) and the outputting step d) are performed through a field-programmable gate array 'FPGA' (120) embedded on the at least one computer card.

9. The method of claim 7 or claim 8, wherein a plurality of computer cards (100) is provided.

10. The method of claim 9, wherein the software to be tested runs on different groups of computer cards (100) and wherein the receiving step b) includes receiving different environment and/or driving data (EDD) by the different groups of computer cards (100).

11. A method for testing a software of an in-vehicle computer, the software running on at least one computer card (100) connected to a server (200), the at least one computer card (100) comprising a computing unit (110) having at least a system on a chip 'SoC' for the in-vehicle computer, the method comprising the steps of:
i. at the server (200), storing environment and/or driving data (EDD)
ii. at the server (200), providing the environment and/or driving data (EDD) to the computer card (100)
iii. at the server (200), receiving the detection and/or behavior data (DBD) generated by the tested software
iv. at the server (200), evaluating the detection and/or behavior data (DBD).

12. The method of claim 11, the software to be tested running on different groups of computer cards (100), wherein different environment and/or driving data (EDD) are stored in step i. and provided to the different groups of computer cards (100) in step ii.

13. A non-transitory computer readable medium comprising program instructions for performing the method of claim 11 or claim 12.
